# EUROPEAN PATENT SPECIFICATION

(11) **EP 4 560 993 B1**
(45) Date of publication and mention of the grant of the patent: **11.11.2026**
(21) Application number: 22951471.6
(22) Date of filing: 19.07.2022
(51) Int. Cl.: H04L 27/00, H04W 36/24, H04B 7/185, H04W 84/06

(54) **COMMUNICATION METHOD AND APPARATUS, AND DEVICE**
KOMMUNIKATIONSVERFAHREN UND -VORRICHTUNG SOWIE VORRICHTUNG
PROCÉDÉ ET APPAREIL DE COMMUNICATION, ET DISPOSITIF

(43) Date of publication of application: 28.05.2025
(60) Divisional application: 25217320.8 / 4 676 161
(73) Proprietor: Beijing Xiaomi Mobile Software Co., Ltd., Beijing 100085 (CN)
(72) Inventor: MAO, Yuxin, Beijing 100085 (CN)
(74) Representative: Dehns Germany Partnerschaft mbB
(86) International application number: PCT/CN2022/106590
(87) International publication number: WO 2024/016193

(56) References cited:
- WO-A1-2021/183328
- WO-A1-2022/056929
- WO-A1-2022/056929
- WO-A1-2022/061664
- CN-A- 109 792 293
- CN-A- 113 508 638
- US-A1- 2023 156 599
- US-A1- 2023 208 508
- ZTE: "Discussion on additional enhancements for IoT-NTN", 3GPP TSG RAN WG1 #107-E E-MEETING R1-2111664, 5 November 2021 (2021-11-05), XP052074279
- ZTE: "Discussion on additional enhancements for IoT-NTN", 3GPP TSG RAN WG1 #105-E E-MEETING R1-2105197, 12 May 2021 (2021-05-12), XP052011275

## Description

### TECHNICAL FIELD

The present disclosure relates to a field of wireless communication technologies, and in particular, to communication methods and apparatuses, and a communication device.

### BACKGROUND

With development of information technologies, there are more urgent requirements for communication efficiency, mobility, diversity, etc. At present, a development focus in the field of communication systems is global mobile communication, and an important component of the global mobile communication is satellite communication. A 3rd generation partnership project (3GPP) standard organization has published a 5th generation mobile networks (5G) technical standard, which supports satellite networking as a 5G access technology, providing large-scale communication coverage or supplemental coverage for ground cellular technologies.

In a satellite communication system, for discontinuous connections of feeder links between satellites and ground stations, how to support service communication with a high latency tolerance becomes a technical problem to be solved urgently.

### SUMMARY

The invention is defined by the subject matter of the independent claims. Advantageous enhancements are subject to the dependent claims.

### BRIEF DESCRIPTION OF DRAWINGS

FIG. 1 is a schematic diagram of an NTN communication system in an embodiment of the present disclosure.
FIG. 2 is a schematic diagram of another NTN communication system in an embodiment of the present disclosure.
FIG. 3 is a schematic implementation flowchart of a first communication method in an embodiment of the present disclosure.
FIG. 4 is a schematic implementation flowchart of a second communication method in an embodiment of the present disclosure.
FIG. 5 is a schematic implementation flowchart of a third communication method in an embodiment of the present disclosure.
FIG. 6 is a schematic implementation flowchart of a fourth communication method in an embodiment of the present disclosure.
FIG. 7 is a schematic implementation flowchart of a fifth communication method in an embodiment of the present disclosure.
FIG. 8 is a schematic structural diagram of a communication apparatus in an embodiment of the present disclosure.
FIG. 9 is a schematic structural diagram of a communication device in an embodiment of the present disclosure.
FIG. 10 is a schematic structural diagram of a terminal device in an embodiment of the present disclosure.

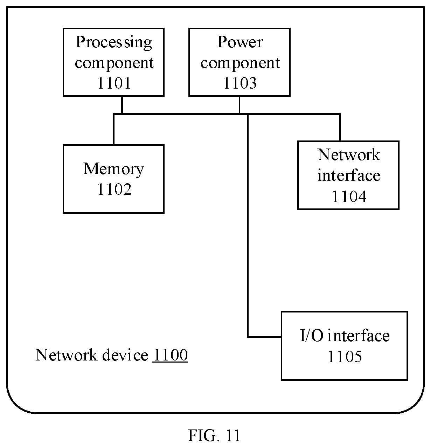

FIG. 11 is a schematic structural diagram of a network device in an embodiment of the present disclosure.

### DETAILED DESCRIPTION

Exemplary embodiments will be described in details herein, with examples thereof represented in the accompanying drawings. When the following description involves the accompanying drawings, same numerals in different figures represent same or similar elements unless otherwise indicated. Implementations described in the following exemplary embodiments do not represent all implementations consistent with embodiments of the present disclosure. Rather, they are only examples of apparatuses and methods that are consistent with some aspects of embodiments of the present disclosure as detailed in the attached claims.

Terms used in the embodiments of the present disclosure are only for a purpose of describing specific embodiments, and are not intended to limit the embodiments of the present disclosure. Singular forms, "a/an" and "the" used in the embodiments and the appended claims of the present disclosure are also intended to include majority forms, unless the context clearly indicates other meanings. It should also be understood that the term "and/or" used herein refers to and includes any or all possible combinations of one or more related listed items.

It should be understood that although terms, such as "first," "second," "third," etc., may be used in the embodiments of the present disclosure to describe various information, such information should not be limited by these terms. These terms are only used to distinguish a same type of information from each other. For example, without departing from the scope of the embodiments of the present disclosure, "first information" may also be referred to as "second information," and similarly, "the second information" may also be referred to as "the first information." Depending on the context, the term "if" used herein may be interpreted as "when," "while," or "in response to determining."

Technical solutions of the embodiments of the present disclosure are applied to a satellite communication system. The communication system may also be referred to as a nonterrestrial network (NTN) communication system. This is not specifically limited in the embodiments of the present disclosure. Optionally, in the embodiments of the present disclosure, the NTN communication system is satellite communication as an example for description.

In wireless communication technologies, the satellite communication is considered as an important aspect of future wireless communication technology development. The satellite communication refers to communication performed by a ground radio communication device using the satellite as a relay. The satellite communication system consists of a satellite part and a ground part. Characteristics of the satellite communication include that: a communication range is large; any two points can communicate within the range covered by radio waves transmitted by the satellite; and the satellite communication is not easily affected by land disasters, and has high reliability.

As a supplement to the ground communication system, the satellite communication has the following characteristics. 1. The satellite communication may extend coverage: for regions where a cellular communication system cannot cover or the coverage cost is high, such as oceans, deserts, remote mountainous regions, etc., communication problems may be solved by the satellite communication. 2. Emergency communication: in situations where cellular communication infrastructure is unavailable due to extreme disasters (such as an earthquake, etc.), a communication connection may be quickly established by using the satellite communication.

The satellite communication may refer to communication between ground radio communication stations by using the communication satellite as a relay station to forward radio waves. Communication functions of the communication satellite may include: receiving a signal, changing a frequency of the signal, amplifying the signal, forwarding the signal, positioning, etc.

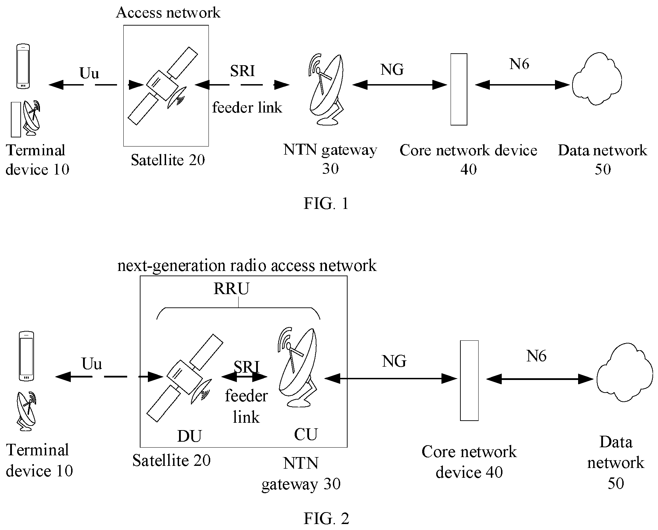

In some possible implementations, FIG. 1 is a schematic diagram of an NTN communication system in an embodiment of the present disclosure. Referring to FIG. 1, the communication system includes a terminal device 10, a satellite 20, a ground NTN gateway 30 (which may also be understood as a ground station, a ground receiving station, a ground device, etc.), a core network element 40, and a data network 50. In this case, the NTN communication network is in a transparent transmission mode. The satellite 20 carries a load having entire functions of the access network device. The terminal device 10 may be connected to the access network device 20 (such as the satellite 20) through a 5G new radio (or air interface) (such as a Uu interface). The satellite 20 may be connected to the ground NTN gateway 30 through an interface (such as a satellite radio interface (SRI)). The ground NTN gateway 30 is connected to the core network element 40 through a radio link interface (such as an NG interface). The core network element 40 is connected to the data network 50 through an interface (such as an N6 interface). The access network device (which may also be understood as the satellite 20) establishes a wireless feeder link with the ground NTN gateway.

In some other possible implementations, FIG. 2 is a schematic diagram of another NTN communication system in an embodiment of the present disclosure. Referring to FIG. 2, the access network device may use an architecture of a centralized unit (CU) and a distributed unit (DU) (that is, a CU-DU architecture), the DU is carried on the satellite 20 (it can be understood that the load, having functions of the access network device, carried by the satellite 20 is the DU), and the CU is deployed on a ground NTN gateway 30 (for example, a gNB). The satellite 20 and the ground NTN gateway 30 form a remote radio unit (RRU), and the satellite 20 and the ground NTN gateway 30 form a next-generation radio access network. In this case, the NTN communication network is in a regeneration mode (which may also be referred to as a non-transparent transmission mode). The terminal device 10 is connected to the satellite 20 through a new radio (for example, a Uu interface), the satellite 20 communicates with the ground NTN gateway 30 through an interface (for example, an SRI), the NTN gateway 30 communicates with the core network element 40 through a radio link interface (for example, an NG interface), and the core network element 40 communicates with the data network 50 through an interface (for example, an N6 interface). In this way, a wireless feeder link is established between the DU in the air and the CU on the ground, that is, between the satellite 20 and the ground NTN gateway 30.

It should be noted that the satellite 20 in FIG. 1 and FIG. 2 may be replaced with another unloaded platform having a determined running orbit, such as an unmanned aerial vehicle, a hot balloon, an aircraft, etc. Certainly, in some possible implementations, the satellite 20 may alternatively be replaced with another ground platform having a determined running orbit, such as a bus or a ship having a determined trajectory, etc., which is not specifically limited in the embodiment of the present disclosure.

In the embodiment of the present disclosure, the NTN gateway 30 may be a node of a transport network layer (TNL) for implementing transparent transmission of data or signaling; and the NTN gateway may also be replaced with a receiving node or a donor node with a fixed location.

It should be understood that FIG. 1 and FIG. 2 are merely examples, and the technical solutions of the embodiments of the present disclosure may also be applied to other NTN communication systems, which is not specifically limited in the embodiments of the present disclosure.

In the embodiment of the present disclosure, the terminal device 10 may also be referred to as: a user equipment (UE), a mobile station (MS), a mobile terminal (MT), an access terminal, a user unit, a user station, a mobile station, a mobile table, a remote station, a remote terminal, a mobile device, a user terminal, a wireless communication device, a user agent, a user apparatus, etc. In the embodiment of the present disclosure, the terminal device is the UE as an example for description.

It may be understood that the terminal device 10 may be a device that provides voice/data connectivity to a user, for example, a handheld device or a vehicle-mounted device having a wireless connection function, etc. For example, some examples of the terminal include: a mobile phone, a tablet computer, a notebook computer, a palmtop computer, a mobile Internet device (MID), a wearable device, a virtual reality (VR) device, an augmented reality (AR) device, a wireless terminal in industrial control, a wireless terminal in auto-driving, a wireless terminal in remote medical surgery, a wireless terminal in a smart grid, a wireless terminal in transportation safety, a wireless terminal in a smart city, a wireless terminal in a smart home, a cellular phone, a cordless phone, a session initiation protocol (SIP) phone, a wireless local loop (WLL) station, a personal digital assistant (PDA), a handheld device having a wireless communication function, a computing device, or another processing device connected to a wireless modem, a vehicle-mounted device, a wearable device, a terminal device in a 5G network, a terminal device in an evolved public land mobile network (PLMN), etc., which is not specifically limited in the embodiment of the present disclosure.

It may be understood that the access network device in this embodiment of the present disclosure may be a device communicating with a terminal device. The access network device is mainly to provide a radio access service, configure a wireless resource, provide a reliable wireless transmission protocol and data encryption protocol, etc., for the terminal device. The access network device may also be referred to as an access device or a radio access network device, may be an evolved NodeB (eNB or eNodeB) in an LTE system, or may be a wireless controller in a cloud radio access network (CRAN) system; or the access network device may be a relay station, an access point, a vehicle-mounted device, a wearable device, an access network device in the 5G network, a network device in a future evolved PLMN network, etc. For example, the access network device may be an access point (AP) in a wireless local area network (WLAN), or may be a gNB in an NR system, which is not specifically limited in the embodiment of the present disclosure.

In the embodiment of the present disclosure, in the above communication system, continuous coverage services may not be provided, due to problems such as the insufficient number of deployed satellites, limited coverage range, etc. The discontinuous coverage may include a connection between the satellite and the UE, that is, there is a situation of the interruption of a service link, or the discontinuous coverage may include a connection between the satellite and a ground NTN gateway, that is, there is a situation of the interruption of the feeder link. Herein, the interruption of the service link or the feeder link may also be described as the discontinuousness of the service link or the feeder link.

At present, the UE accesses the 5G network through the satellite to deploy a service, and the UE needs to establish a control plane connection and a user plane connection with a core network through the satellite. Based on these connections, the UE can deploy specific services. In addition, in the process of deploying the service, to ensure service continuity, these connections need to be kept all the time, even when UE or satellite access movement is switched, a connection after switching needs to be established first, and after a service flow is migrated to the connection after switching, the existing connection is released. However, due to discontinuous coverage of the satellite, there may be the situation of the interruption of the feeder link, that is, there is the situation of the interruption of the above connection, and in this case, how to deploy the service in the communication system, for example, supporting the latency tolerant service communication, becomes a technical problem to be solved urgently.

To solve the above technical problem, an embodiment of the present disclosure provides a communication method, and the communication method may be applied to the NTN communication system described in one or more of the above embodiments.

The communication method provided by the embodiment of the present disclosure is described in combination with the NTN communication system below.

In the embodiment of the present disclosure, the first core network element (also denoted as a core network element A) may be a core network element in the NTN communication system, for example, an access and mobility management function (AMF) entity. The second core network device (also denoted as a core network element B) may be another core network element in the NTN communication system, for example, a session management function (SMF) entity and/or a user plane function (UPF) entity. The access network device may be a reference point on a feeder link in the NTN communication system. It may be understood that the reference point on the feeder link may be any access network device on the feeder link, for example, the reference point on the feeder link may be any access network device on the feeder link, such as a satellite, an NTN gateway, a ground base station, etc. Herein, the core network element may also be described as a core network function entity, a core network device, etc.

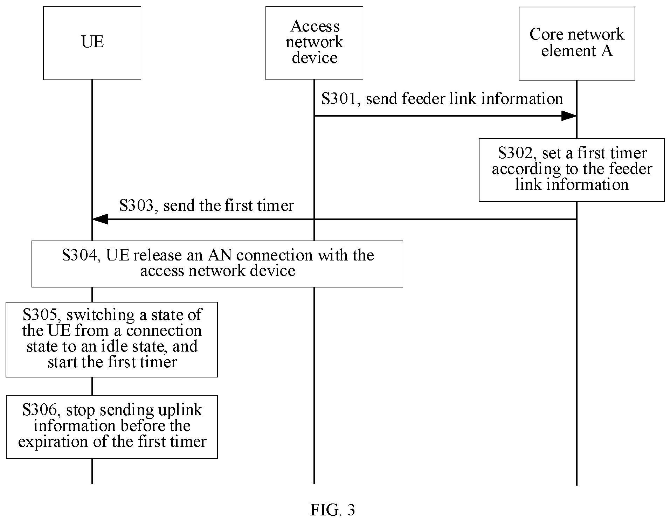

FIG. 3 is a schematic implementation flowchart of a first communication method in an embodiment of the present disclosure. Referring to FIG. 3, the communication method may include steps S301 to S303.

At step S301, the access network device sends feeder link information to the core network element A.

The feeder link information may be used by an access network or a core network to determine information of a connection between a satellite and a ground station (or may be understood as a ground NTN gateway, a ground CU, etc.).

It should be noted that the connection between the satellite and the ground station may be understood as a feeder link.

In the embodiment of the present disclosure, the feeder link information may include but is not limited to the following two cases.

In a first case, the feeder link information may indicate the information of the connection between the satellite and the ground station, for example, one or more of a starting moment of the connection between the satellite and the ground station, a period of the connection, an interruption starting moment of the connection, and an interruption period of the connection.

For example, the feeder link information may include: the starting moment of the connection between the satellite and the ground station, the period of the connection, the interruption starting moment of the connection, and the interruption period of the connection. Herein, the starting moment of the connection may be understood as a moment at which the satellite establishes the connection with the ground station. The period of the connection may be understood as a duration in which the satellite remains connected to the ground station. During this duration, the feeder link between the satellite and the ground station remains connected. The interruption starting moment of the connection may be understood as a moment at which the satellite is disconnected from the ground station. The interruption period of the connection may be understood as a duration of disconnection between the satellite and the ground station. During this duration, the feeder link between the satellite and the ground station is disconnected.

In the embodiment of the present disclosure, the above is only an example of the feeder link information. In practical applications, the feeder link information may further include, for example, a terminating moment of the connection, an ending moment of the interruption, etc., as long as the feeder link information can indicate the information of the connection between the satellite and the ground station, which is not specifically limited in the embodiment of the present disclosure.

In an embodiment, before the step S301, the method may further include: determining, by the access network device, the starting moment of the connection, the period of the connection, the interruption starting moment of the connection, and the interruption period of the connection according to the coverage information of the satellite. It may be understood that the access network device may determine the coverage information of the satellite according to ephemeris information of the satellite, where the coverage information of the satellite may indicate a region covered by the satellite within one or more time ranges. The access network device determines a location of a ground station associated with the UE in combination with the region covered by the satellite within the one or more time ranges and a location of the UE or a location of the ground station, then calculates the starting moment, the period, the interruption starting moment, the interruption period, etc., of the corresponding connection, and then performs the step S301, sending the information to the core network element A.

In a second case, the feeder link information may include the coverage information of the satellite. It may be understood that the access network device may send the coverage information of the satellite to the core network element A, so that the core network element A calculates the starting moment, the period, the interruption starting moment, and the interruption period of the connection according to the coverage information of the satellite.

In an embodiment, after the step S301, the method further includes: determining, by the core network element A, the starting moment, the period, the interruption starting moment, and the interruption period of the connection according to the coverage information of the satellite.

In practical applications, the feeder link information may further include other information, which is not specifically limited in the embodiment of the present disclosure.

In some possible implementations, the access network device may send the feeder link information to the core network element A through at least one of: a registration procedure initiated by the UE, a registration update procedure initiated by the UE, a service request procedure initiated by the UE, and an access network (AN) connection release procedure initiated by the access network.

At step S302, the core network element A sets a first timer according to the feeder link information.

It may be understood that after obtaining the starting moment, the period, the interruption starting moment, and the interruption period of the connection, the core network element A may set a first timer according to the starting moment, the period, the interruption starting moment, and the interruption period of the connection. A timing duration of the first timer is not less than the interruption period.

At step S303, the core network element A sends the first timer to a UE associated with the connection.

Herein, the UE associated with the connection may be understood as a UE using the feeder link, or a UE communicating with a network through the access network device.

In an embodiment, the core network element A sending the first timer to the UE may be understood as that the core network element A sends a value of the first timer (or may be understood as the timing duration of the first timer) to the UE. For example, the core network element A may send the value of the first timer by the value being carried in a non-access stratum (NAS) message.

In some possible implementations, the core network element A may send, to the UE, the first timer by the first timer being carried in the NAS message in at least one of: a user equipment configuration update (UCU) procedure initiated by a network; a service request procedure initiated by the network; a registration procedure initiated by the UE; or a registration update procedure initiated by the UE.

The method further includes: determining, by the core network element A, that the connection is interrupted or is to be interrupted according to the feeder link information, and switching, by the core network element A, the state of the UE from the connection state to the idle state, or sending instruction information to a core network element B, for example, an SMF entity and/or a UPF entity, to instruct the SMF entity and/or the UPF entity to buffer downlink information of the UE.

In some possible implementations, the method further includes: determining, by the access network device, that the connection is interrupted or is to be interrupted, and buffering, by the access network device, uplink information of the UE.

In some possible implementations, after the step S303, the UE may further release an access network connection with the access network device, and switch a state of the UE from a connection state to an idle state.

It may be understood that after receiving the first timer, the UE may first store the first timer. Then, the UE waits to release the AN connection between the UE and the access network device, switches the state of the UE to the idle state after the AN connection is released, and starts the first timer.

In some possible implementations, before the expiration of the first timer, the UE may stop sending the uplink information. It may be understood that because the timing duration of the first timer is not less than the interruption period of the connection between the satellite and the ground station, before the expiration of the first timer, the connection between the satellite and the ground station may still be interrupted, and the UE stops sending the uplink information until the expiration of the first timer.

At step S304, the UE releases an AN connection with the access network device.

At step S305, the UE switches a state of the UE from a connection state to an idle state, and starts the first timer.

It may be understood that after receiving the first timer, the UE may first store the first timer. Then, the UE waits to release the AN connection between the UE and the access network device, switches the state of the UE to the idle state after the AN connection is released, and starts the first timer.

At step S306, the UE stops sending uplink information before the expiration of the first timer.

It may be understood that because the timing duration of the first timer is not less than the interruption period of the connection between the satellite and the ground station, before the expiration of the first timer, the connection between the satellite and the ground station may still be interrupted, and the UE stops sending the uplink information until the expiration of the first timer.

In some possible implementations, after the steps S306, the method further includes: after the expiration of the first timer, establishing, by the UE, an AN connection with the access network device, and setting the state of the terminal device to a connection state, and sending the uplink information with the AN connection.

It may be understood that because the timing duration of the first timer is not less than the interruption period of the connection between the satellite and the ground station, after the expiration of the first timer, the connection between the satellite and the ground station is restored. At this time, the UE may establish an AN connection with the access network device and set the state of the UE to the connection state, and then send the uplink information with the established AN connection with continue the corresponding service.

In some possible implementations, the method further includes: determining, by the core network element, establishment of the connection between the satellite and the ground station according to the feeder link information, and then switching, by the core network element A, the state of the UE into the connection state. Certainly, the core network element A may further instruct the core network element B to send the buffered downlink information of the UE.

In some possible implementations, the method further includes: determining, by the access network device, establishment of the connection between the satellite and the ground station, and then sending, by the access network device, the buffered uplink information of the UE.

It may be understood that because the timing duration of the first timer is not less than the interruption period of the connection between the satellite and the ground station, after the expiration of the first timer, the connection between the satellite and the ground station is restored. At this time, the access network device may send the buffered uplink information of the UE, and the core network element A may instruct the core network element B to send the buffered downlink data of the UE to continue the corresponding service.

In some possible implementations, according to a capability of the UE, a service policy, an operator policy, etc., some UEs may support a high latency service, that is, supporting performing of the step S304. Some UEs do not support the high latency service. In this case, before the step S302, the core network element may first determine whether the UE supports the high latency service. When determining that the UE supports the high latency service, the core network element A authorizes the UE according to at least the capability of the UE for the high latency service, and continues to perform the steps S302 to S303 after authorizing the UE to use the high latency service; otherwise, the procedure ends.

In some possible implementations, the UE may send capability information for the high latency service to the core network element A, to indicate whether the UE supports the high latency service. If the capability information sent by the UE indicates that the UE supports the high latency service (that is, first capability information), the core network element A may determine that the UE is capable of using the high latency service. Then, the core network element A further decides whether to authorize the UE to use the high latency service according to the service policy, the operator policy, etc. On the contrary, if the UE does not send the capability information or sends capability information indicating that the UE does not support the high latency service (that is, second capability information), the core network element A determines that the UE is not capable of using the high latency service, and then does not authorize the UE to use the high latency service.

For example, in the above process, the UE may first report the capability information of the UE to the core network element A in the registration procedure for example, and then the core network element A authorizes the high latency service. Next, after receiving the feeder link information, the core network element A decides, according to whether the UE is authorized to use the high latency service, whether to set the first timer for the UE.

It should be noted that, in the embodiment of the present disclosure, the high latency service may be understood as a service with a high latency tolerance, or may be understood as a non-latency sensitive service. For example, an Internet of Things device collects meteorological data, navigation data, etc.

The above method is described by a specific example below.

It is set that the above method is applied to an AN connection release procedure initiated by an access network. The core network element A is an AMF entity, the core network element B is an SMF entity and/or a UPF entity, and the access network device is a base station deployed on a satellite.

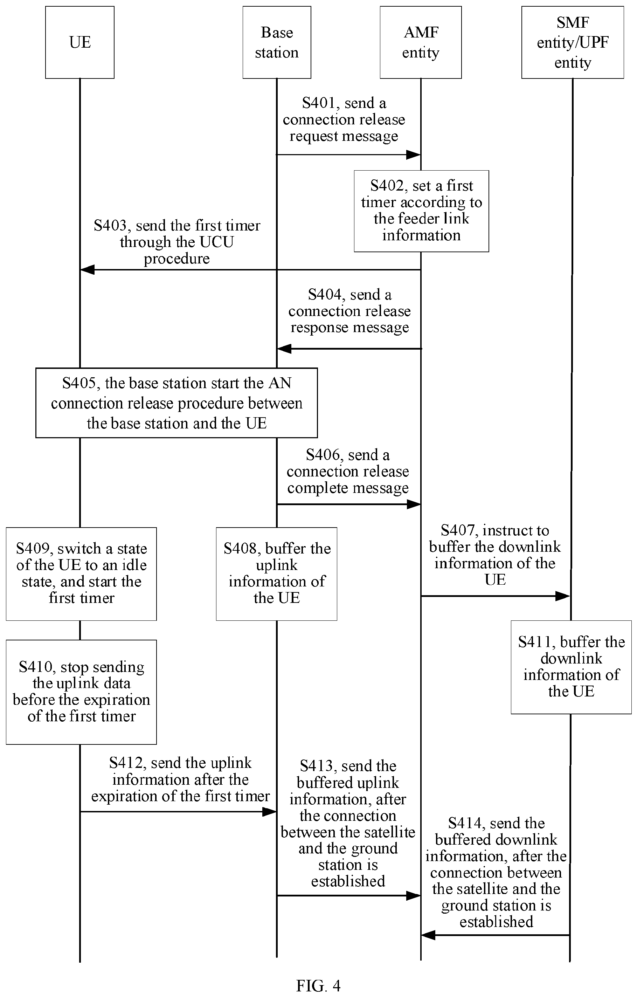

FIG. 4 is a schematic implementation flowchart of a second communication method in an embodiment of the present disclosure. Referring to FIG. 4, the above method may include steps S401 to S414.

At step S401, the base station sends a connection release request message to the AMF entity.

The connection release request message carries the feeder link information. In this case, the feeder link information may include a starting moment, a period, an interruption starting moment, and an interruption period of the connection between the satellite and the ground station, that is, the feeder link information is in the above first case.

At step S402, the AMF entity sets a first timer according to the feeder link information.

At step S403, the AMF entity sends the first timer to the UE that is authorized to use the high latency service through the UCU procedure.

At step S404, the AMF entity sends an N2 connection release response message to the base station in response to the connection release request message.

At step S405, the base station starts the AN connection release procedure between the base station and the UE, in response to the N2 connection release response message.

At step S406, the base station sends an N2 connection release complete message to the AMF entity.

At step S407, the AMF entity instructs the SMF entity and/or the UPF entity to buffer the downlink information of the UE.

For example, a packet data unit (PDU) session modification procedure is started between the AMF entity and the SMF entity, to instruct the SMF entity to start downlink information buffering for the UE. In addition, an N4 session modification process is started between the SMF entity and the UPF entity, to instruct the UPF entity to start the downlink information buffering for the UE.

After the step S406, the base station performs the step S408, the UE performs the steps S409 to S410, and the SMF entity and the UPF entity perform the step S411.

At step S408, the base station buffers the uplink information of the UE.

At step S409, the UE switches a state of the UE to an idle state, and starts the first timer.

At step S410, the UE stops sending the uplink data before the expiration of the first timer.

At step S411, the SMF entity and/or the UPF entity buffer the downlink information of the UE.

Further, the UE further performs the step S412, the base station performs the step S413, the SMF entity and the UPF entity perform the step S411.

At step S412, after the expiration of the first timer, the UE sends the uplink information, for example, uplink signaling, to establish an AN connection.

At step S413, after the connection between the satellite and the ground station is established, the base station sends the buffered uplink information of the UE.

At step S414, after the connection between the satellite and the ground station is established, the SMF entity and/or the UPF entity send the buffered downlink information of the UE.

So far, service communication supporting the high latency tolerance under the condition of the discontinuous connection of the feeder link has been completed.

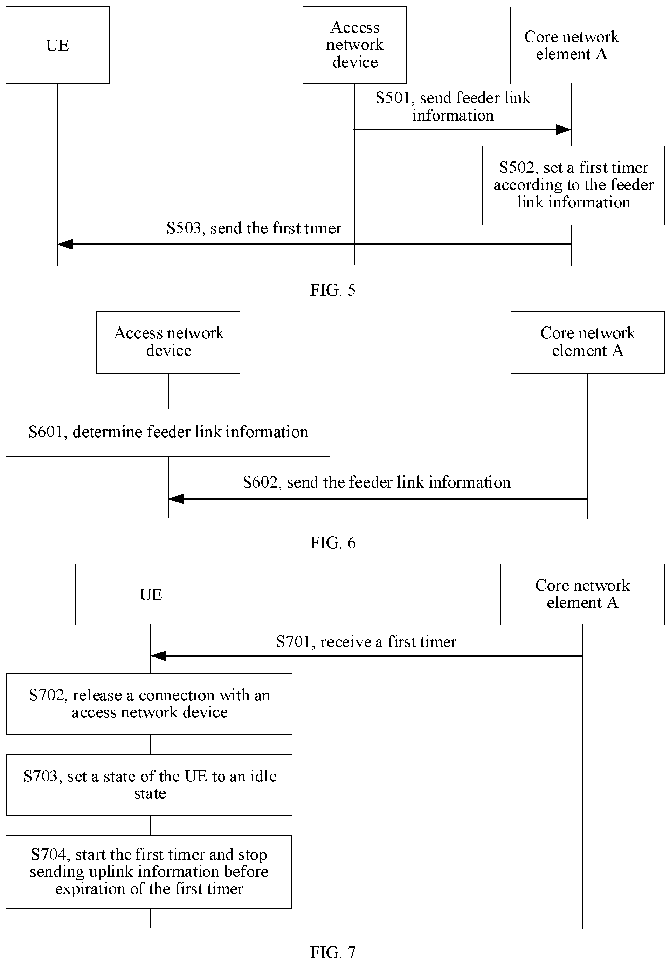

In some possible implementations, an embodiment of the present disclosure further provides a communication method, performed by a core network element A, for example, an AMF entity. FIG. 5 is a schematic implementation flowchart of a third communication method in an embodiment of the present disclosure. Referring to FIG. 5, the communication method may include steps S501 to S503.

At step S501, feeder link information sent by an access network device is received.

The feeder link information is for determining information of a connection between a satellite and a ground station.

At step S502, a first timer is set according to the feeder link information.

The timing duration of the first timer is not less than the interruption period of the connection.

At step S503, the first timer is sent to the UE associated with the connection.

The first timer is for instructing the UE to send uplink information after expiration of the timer.

The feeder link information includes: a starting moment of the connection, a period of the connection, an interruption starting moment of the connection, and the interruption period of the connection; or coverage information of the satellite.

In some possible implementations, in response to the feeder link information including the coverage information of the satellite, setting the first timer according to the feeder link information, includes: determining, according to the coverage information of the satellite, the starting moment of the connection, the period of the connection, the interruption starting moment of the connection, and the interruption period of the connection; and setting the first timer according to the starting moment of the connection, the period of the connection, the interruption starting moment of the connection, and the interruption period of the connection.

In some possible implementations, before receiving the feeder link information sent by the access network device, the method further includes: receiving first capability information sent by the UE, where the first capability information indicates that the UE supports a high latency service.

In some possible implementations, before setting the first timer according to the feeder link information, the method further includes: authorizing, according to at least the first capability information, the UE to use the high latency service.

In some possible implementations, the method further includes: receiving the feeder link information through at least one of: a registration procedure initiated by the UE; a registration update procedure initiated by the UE; a service request procedure initiated by the UE; or an AN connection release procedure initiated by the access network device.

In some possible implementations, the method further includes: sending the first timer to the UE associated with the connection through at least one of: a UCU procedure initiated by a network; a service request procedure initiated by the network; a registration procedure initiated by the UE; or a registration update procedure initiated by the UE.

In some possible implementations, the method further includes: determining an interruption of the connection according to the feeder link information; and performing at least one of: switching a state of the UE into an idle state; or instructing a core network element B (for example, an SMF entity and/or an AMF entity) to buffer downlink information of the UE.

In some possible implementations, the method further includes: determining an establishment of the connection according to the feeder link information; and performing at least one of: switching a state of the UE into a connection state; or instructing a core network element B to send buffered downlink information of the UE.

It should be noted that, performing processes of the steps S501 and S503 may refer to description of performing processes at the side of the core network element A in the embodiments in FIG. 3 to FIG. 4, and will not be repeated here.

In some possible implementations, an embodiment of the present disclosure further provides a communication method, performed by an access network device, for example, a base station. FIG. 6 is a schematic implementation flowchart of a fourth communication method in an embodiment of the present disclosure. Referring to FIG. 6, the communication method may include steps S601 to S602.

At step S601, feeder link information is determined.

The feeder link information is for determining information of a connection between a satellite and a ground station.

At step S602, the feeder link information is sent to the core network element A.

In some possible implementations, the feeder link information includes: a starting moment of the connection, a period of the connection, an interruption starting moment of the connection, and the interruption period of the connection; or coverage information of the satellite.

In some possible implementations, sending the feeder link information to the core network element A through at least one of: a registration procedure initiated by the UE; a registration update procedure initiated by the UE; a service request procedure initiated by the UE; or an access network connection release procedure initiated by the access network.

In some possible implementations, receiving the first timer from the core network element A through one of: a UCU procedure initiated by a network; a service request procedure initiated by the network; a registration procedure initiated by the UE; or a registration update procedure initiated by the UE.

In some possible implementations, the method further includes: determining the interruption of the connection, and buffering uplink information of the UE.

In some possible implementations, the method further includes: determining the establishment of the connection, and then sending the buffered uplink information of the UE.

It should be noted that, performing processes of the steps S601 and S602 may refer to description of performing processes at the side of the access network device in the embodiments in FIG. 3 to FIG. 4, and will not be repeated here.

In some possible implementations, an embodiment of the present disclosure further provides a communication method, performed by a terminal device, for example, a UE. FIG. 7 is a schematic implementation flowchart of a fifth communication method in an embodiment of the present disclosure. Referring to FIG. 7, the communication method may include steps S701 to S702.

At step S701, a first timer sent by a core network element A is received, where a duration of the first timer is not less than an interruption period of a connection between a satellite and a ground station.

At step S702, a connection with an access network device is released.

At step S703, a state of the UE is set to an idle state.

At step S704, the first timer is started and sending uplink information is stopped before expiration of the first timer.

In some possible implementations, the method further includes: releasing a connection with an access network device; setting a state of a UE to an idle state; starting the first timer; and stopping sending uplink information before expiration of the first timer.

In some possible implementations, sending uplink information after the expiration of the first timer includes: after the expiration of the first timer, establishing an access network connection with the access network device; and sending the uplink information with the access network connection.

In some possible implementations, the method further includes: sending first capability information, where the first capability information indicates that the UE supports a high latency service.

It should be noted that, performing processes of the steps S701 and S704 may refer to description of performing processes at the side of the UE in the embodiments in FIG. 3 to FIG. 4, and will not be repeated here.

In the embodiment of the present disclosure, in an NTN communication system, for the discontinuous connection of a feeder link, the access network device sends feeder link information to the core network element A, so that the core network element A can determine a connection situation between a satellite and a ground station, for example, determine when to connect, how long to connect, when to disconnect, how long to disconnect, etc. The core network element A may instruct, according to the feeder link information, the UE to send uplink information during a connection (that is, after the expiration of the first timer) between the satellite and the ground station, to implement service communication supporting a high latency tolerance.

Based on a same inventive concept, an embodiment of the present disclosure provides a communication apparatus. The communication apparatus may be a core device in an NTN communication system, or a chip or a system on chip in a terminal device, or may be a functional module in the terminal device to implement the method in each of the above embodiments. The communication apparatus may implement functions performed by the terminal device in each of the above embodiments, and the functions may be implemented by hardware executing corresponding software. The hardware or software includes one or more modules corresponding to the above functions.

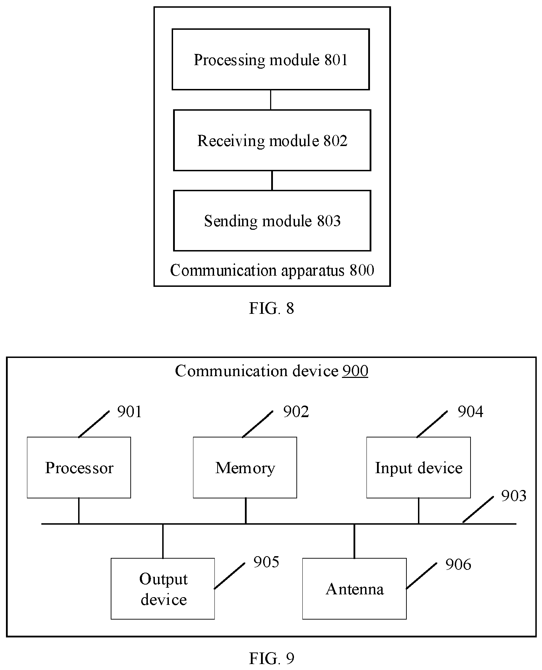

Based on the same inventive concept, an embodiment of the present disclosure provides a communication apparatus. FIG. 8 is a schematic structural diagram of a communication apparatus in an embodiment of the present disclosure. Referring to FIG. 8, the communication apparatus 800 may include a processing module 801, a receiving module 802, and a sending module 803.

In some possible implementations, the communication apparatus may be a first core network element (for example, a core network element A) in an NTN communication system, or a chip or a system on chip in the first core network element, or may be a functional module in the first core network element to implement the method in each of the above embodiments. The communication apparatus may implement functions performed by the first core network element in each of the above embodiments, and the functions may be implemented by hardware executing corresponding software. The hardware or software includes one or more modules corresponding to the above functions.

Correspondingly, the receiving module 802 is configured to receive feeder link information sent by an access network device, where the feeder link information is for determining information of a connection between a satellite and a ground station; and the processing module 801 is configured to set a first timer according to the feeder link information, where a timing duration of the first timer is not less than an interruption period of the connection; and the sending module 803 is configured to send the first timer to a terminal device associated with the connection, where the first timer is for instructing the terminal to send uplink information after expiration of the first timer.

In some possible implementations, the feeder link information includes: a starting moment of the connection, a period of the connection, an interruption starting moment of the connection, and the interruption period of the connection; or coverage information of the satellite.

In some possible implementations, in response to the feeder link information including the coverage information of the satellite, the processing module 801 is configured to: determine, according to the coverage information of the satellite, the starting moment of the connection, the period of the connection, the interruption starting moment of the connection, and the interruption period of the connection; and set the first timer according to the starting moment of the connection, the period of the connection, the interruption starting moment of the connection, and the interruption period of the connection.

In some possible implementations, the receiving module 802 is configured to, before receiving the feeder link information sent by the access network device, receive first capability information sent by the terminal device, where the first capability information indicates that the terminal device supports a high latency service.

In some possible implementations, the processing module 801 is configured to, before setting the first timer according to the feeder link information, authorize the terminal device to use the high latency service according to at least the first capability information.

In some possible implementations, the receiving module 802 is configured to receive the feeder link information through at least one of: a registration procedure initiated by the terminal device; a registration update procedure initiated by the terminal device; a service request procedure initiated by the terminal device; or an access network connection release procedure initiated by the access network device.

In some possible implementations, the sending module 803 is configured to send the first timer to the terminal device associated with the connection through at least one of: a UCU procedure initiated by a network; a service request procedure initiated by the network; a registration procedure initiated by the terminal device; or a registration update procedure initiated by the terminal device.

In some possible implementations, the processing module 801 is configured to determine an interruption of the connection according to the feeder link information; and the processing module 801 is further configured to switch a state of the terminal device into an idle state; and/or the sending module 803 is further configured to instruct a second core network element (for example, a core network element B) to buffer downlink information of the terminal device.

In some possible implementations, the processing module 801 is configured to determine an establishment of the connection according to the feeder link information; and the processing module 801 is further configured to switch a state of the terminal device into a connection state; and/or the sending module 803 is further configured to instruct the second core network element to send the buffered downlink information of the terminal device.

In some possible implementations, the communication apparatus may be an access network device in an NTN communication system, or a chip or a system on chip in the access network device, or may be a functional module in the access network device to implement the method in each of the above embodiments. The communication apparatus may implement functions performed by the access network device in each of the above embodiments, and the functions may be implemented by hardware executing corresponding software. The hardware or software includes one or more modules corresponding to the above functions.

Correspondingly, the processing module 801 is configured to determine feeder link information, where the feeder link information is for determining information of a connection between a satellite and a ground station; and the sending module 803 is configured to send the feeder link information to a first core network element.

In some possible implementations, the feeder link information includes: a starting moment of the connection, a period of the connection, an interruption starting moment of the connection, and the interruption period of the connection; or coverage information of the satellite.

In some possible implementations, the sending module 802 is configured to send the feeder link information to the first core network element through one of: a registration procedure initiated by the terminal device; a registration update procedure initiated by the terminal device; a service request procedure initiated by the terminal device; or an access network connection release procedure initiated by the access network.

In some possible implementations, the processing module 801 is configured to determine an interruption of the connection, and buffer uplink information of the terminal device.

In some possible implementations, the processing module 801 is configured to determine an establishment of the connection; and the sending module 803 is configured to send buffered uplink information of the terminal device.

In some possible implementations, the communication apparatus may be a terminal device (for example, a core network element A) in an NTN communication system, or a chip or a system on chip in the terminal device, or may be a functional module in the terminal device to implement the method in each of the above embodiments. The communication apparatus may implement functions performed by the terminal device in each of the above embodiments, and the functions may be implemented by hardware executing corresponding software. The hardware or software includes one or more modules corresponding to the above functions.

Correspondingly, the receiving module 802 is configured to receive a first timer sent by a first core network element, where a duration of the first timer is not less than an interruption period of a connection between a satellite and a ground station; the processing module 801 is configured to release a connection with an access network device, set a state of a terminal device to an idle state, and start the first timer; and the sending module 803 is configured to stop sending uplink information before expiration of the first timer.

In some possible implementations, the receiving module 802 is configured to receive the first timer from the first core network element through one of: a UCU procedure initiated by a network; a service request procedure initiated by the network; a registration procedure initiated by the terminal device; or a registration update procedure initiated by the terminal device.

In some possible implementations, the processing module 801 is configured to, after the expiration of the first timer, establish an AN connection with the access network device, and set the state of the terminal device to a connection state; and the sending module 803 is configured to send the uplink information with the AN connection.

In some possible implementations, the sending module 803 is configured to send first capability information, where the first capability information indicates that the terminal device supports a high latency service.

It should be noted that specific implementation processes of the processing module 801, the receiving module 802, and the sending module 803 may refer to detailed description of the embodiments in FIG. 3 to FIG. 7, and will be not described herein again for brevity of the specification.

The receiving module 802 mentioned in the embodiment of the present disclosure may be a receiving interface, a receiving circuit, a receiver, etc.; the sending module 803 may be a sending interface, a sending circuit, a sender, etc.; and the processing module 801 may be one or more processors.

Based on the same inventive concept, an embodiment of the present disclosure provides a core network communication system, including: a first core network element and a second core network element, where the first core network element is configured to determine, according to feeder link information, an interruption of a connection between a satellite and a ground station, and instruct the second core network element to buffer downlink information of a terminal device associated with the connection. The second core network element is configured to buffer the downlink information of the terminal device according to the instruction of the first core network element.

In some possible implementations, the first core network element is configured to determine, according to feeder link information, an establishment of a connection between a satellite and a ground station, and instruct a second core network element to send buffered downlink information of a terminal device. The second core network element is configured to send the buffered downlink information of the terminal device according to the instruction of the first core network element.

In some possible implementations, the feeder link information indicates one or more of a starting moment of the connection between the satellite and the ground station, a period of the connection, an interruption starting moment of the connection, and an interruption period of the connection.

For example, the feeder link information includes one or more of the starting moment of the connection between the satellite and the ground station, the period of the connection, the interruption starting moment of the connection, and the interruption period of the connection.

In some possible implementations, the feeder link information includes coverage information of a satellite.

In some possible implementations, the first core network element may be an access and mobility management function entity, and the second core network element may be a session management function entity and/or a user plane function entity.

Based on the same inventive concept, an embodiment of the present disclosure provides a communication device. The communication device may be the terminal device, the core network element A, the core network element B, or the access network device in one or more of the above embodiments. FIG. 9 is a schematic structural diagram of a communication device in an embodiment of the present disclosure. Referring to FIG. 9, a communication device 900 uses general computer hardware, and includes a processor 901, a memory 902, a bus 903, an input device 904, and an output device 905.

In some possible implementations, the memory 902 may include computer storage media in the form of volatile and/or non-volatile memory, such as a read-only memory and/or random-access memory. The memory 902 may store an operating system, an application program, other program modules, executable codes, program data, user data, etc.

The input device 904 may be used to input commands and information to a communication device, such as a keyboard or pointing device, for example a mouse, a trackball, a touchpad, a microphone, a joystick, a game pad, a satellite television antenna, a scanner, or a similar device. These input devices may be connected to the processor 901 through the bus 903.

The output device 905 may be used by a communication device to output information, and in addition to a monitor, the output device 905 may further be another peripheral output device, for example, a speaker and/or a printing device, and these output devices may also be connected to the processor 901 through the bus 903.

The communication device may be connected to a network through the antenna 906, for example, connected to a local area network (LAN). In a networked environment, the computer executable instructions stored in the control device may be stored in a remote storage device, and are not limited to being stored locally.

When the processor 901 in the communication device executes the executable codes or the application program stored in the memory 902, the communication device performs the communication method at the side of the terminal device or at the side of the network device A in the above embodiments. The specific performing process refers to the above embodiments and will not be repeated here.

In addition, the memory 902 stores computer executable instructions configured to implement functions of the processing module 801, the receiving module 802, and the sending module 903 in FIG. 8. Functions/implementation processes of the processing module 801, the receiving module 802, and the sending module 903 in FIG. 8 may all be implemented by the processor 901 in FIG. 9 invoking the computer executable instructions stored in the memory 902. The specific implementation processes and functions refer to the above relevant embodiments.

Based on the same inventive concept, an embodiment of the present disclosure provides a terminal device, and the terminal device is consistent with the terminal device in one or more of the above embodiments. Optionally, the terminal device may be a mobile phone, a computer, a digital broadcast terminal, a message transceiving device, a game console, a tablet device, a medical device, a fitness device, a personal digital assistant, etc.

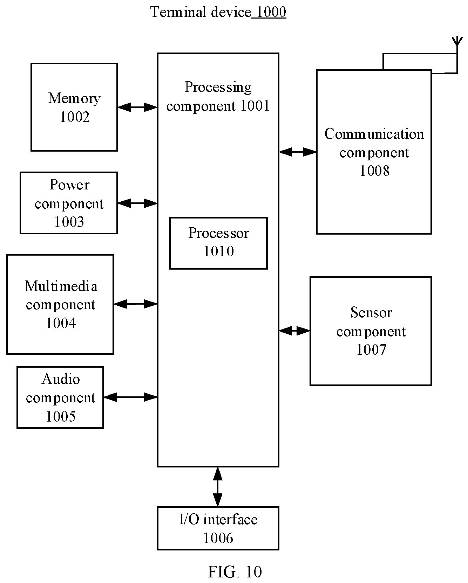

FIG. 10 is a schematic structural diagram of a terminal device in an embodiment of the present disclosure. Referring to FIG. 10, the terminal device 1000 may include one or more of the following components: a processing component 1001, a memory 1002, a power component 1003, a multimedia component 1004, an audio component 1005, an input/output (I/O) interface 1006, a sensor component 1007, and a communication component 1008.

The processing component 1001 typically controls the overall operation of the terminal device 1000, such as operations associated with display, phone calls, data communication, camera operations, and recording operations. The processing component 1001 may include one or more processors 1010 to execute instructions to complete all or part of the steps in the above methods. Additionally, the processing component 1001 may include one or more modules to facilitate interaction between the processing component 1001 and other components. For example, the processing component 1001 may include a multimedia module to facilitate interaction between the multimedia component 1004 and the processing component 1001.

The memory 1002 is configured to storing various types of data to support operations of the device 1000. Examples of such data include instructions, contact data, phonebook data, messages, pictures, videos, etc., for any application program or method operating on the terminal device 1000. The memory 1002 may be realized by any type of volatile or non-volatile storage device or their combination, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disk.

The power component 1003 provides power to various components of the terminal device 1000. The power component 1003 may include a power supply management system, one or more power supplies, and other components that are associated with generating, managing, and distributing power for the terminal device 1000.

The multimedia component 1004 includes a screen providing an output interface between the terminal device 1000 and the user. In some embodiments, the screen may include a liquid crystal display (LCD) and a touch panel (TP). If the screen includes the touch panel, the screen may be implemented as a touch screen, to receive an input signal from the user. The touch panel includes one or more touch sensors to sense the touch, the slide, and the gesture on the touch panel. The touch sensor may not only sense the boundary of the touch or slide action, but also detect the duration and pressure related to the touch or slide operation. In some embodiments, the multimedia component 1004 includes a front facing camera and/or a rear facing camera. When the device 1000 is in an operation mode, such as a shooting mode or a video mode, the front facing camera and/or the rear facing camera can receive external multimedia data. Each of the front facing camera and rear facing camera may be a fixed optical lens system or has a focal length and an optical zoom capability.

The audio component 1005 is configured to output and/or input audio signals. For example, the audio component 1005 includes a microphone (MIC). The microphone is configured for receiving external audio signals when the terminal device 1000 is in the operating mode, such as a call mode, a recording mode, and a speech recognition mode. The received audio signals may be further stored in the memory 1002 or sent via the communication component 1008. In some embodiments, the audio component 1005 also includes a speaker to output the audio signals.

The I/O interface 1006 provides an interface between the processing component 1001 and peripheral interface modules. The peripheral interface modules can be keyboards, click wheels, buttons, etc. These buttons may include but are not limited to: a home button, a volume button, a start button, and a lock button.

The sensor component 1007 includes one or more sensors to provide various aspects of state assessment for the terminal device 1000. For example, the sensor component 1007 may detect an open/closed state of the terminal device 1000, relative positioning of components that are for example a display and keypad of the terminal device 1000. The sensor component 1007 may also detect a position change of the terminal device 1000 or of a component of the terminal device 1000, presence or absence of the user contacting with the terminal device 1000, an orientation or acceleration/deceleration of the terminal device 1000, and a temperature change of the terminal device 1000. The sensor component 1007 may include a proximity sensor configured to detect the presence of nearby objects without any physical contact. The sensor component 1007 may also include a light sensor, such as a CMOS or CCD image sensor, for use in an imaging application. In some embodiments, the sensor component 1007 may also include an acceleration sensor, a gyroscope sensor, a magnetic sensor, a pressure sensor, or a temperature sensor.

The communication component 1008 is configured to facilitate wired or wireless communication between the terminal device 1000 and other devices. The terminal device 1000 may access a wireless network based on a communication standard, such as WiFi, 2G, 3G, or a combination of them. In an exemplary embodiment, the communication component 1008 receives, via a broadcast channel, a broadcast signal or broadcast related information from an external broadcast management system. In an exemplary embodiment, the communication component 1008 further includes a near-field communication (NFC) module to facilitate shortrange communication. For example, the NFC module may be implemented based on a radio frequency identification (RFID) technology, an infrared data association (IrDA) technology, an ultra-wideband (UWB) technology, a Bluetooth (BT) technology, and other technologies.

In an exemplary embodiment, the terminal device 1000 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the above methods.

Based on the same inventive concept, an embodiment of the present disclosure provides a network device. The network device may be consistent with the core network element A, the core network element B, or the access network device in one or more of the above embodiments.

FIG. 14 is a schematic structural diagram of a network device in an embodiment of the present disclosure. Referring to FIG. 14, the network device 1100 may include a processing component 1101, that further includes one or more processors, and memory resources represented by a memory 1102, for storing instructions that is executable by the processing component 1101, such as an application program. The application program stored in the memory 1102 may include one or more modules that each corresponds to a set of instructions. In addition, the processing component 1101 is configured to execute instructions to perform any method performed by the network device A in the above methods.

The network device 1100 may also include a power component 1103 configured to perform power management of the network device 1100, a wired or wireless network interface 1104 configured to connect the network device 1100 to the network, and an input/output (I/O) interface 1105. The network device 1100 may operate an operating system stored in the memory 1102, such as Windows Server TM, Mac OS XTM, UnixTM, LinuxTM, FreeBSDTM, or a similar operating system.

Based on the same inventive concept, an embodiment of the present disclosure further provides a computer readable storage medium. The computer readable storage medium stores instructions; and when the instructions are executed by a computer, the communication method in one or more of the above embodiments is performed.

Based on the same inventive concept, an embodiment of the present disclosure further provides a computer program or a computer program product. The computer program product, when executed on a computer, causes the computer to implement the communication method in one or more of the above embodiments.

The specification and embodiments are only considered exemplary, and the true scope of the present disclosure are indicated by the following claims.

## Claims

1. A communication method, performed by a first core network element, comprising:
receiving feeder link information sent by an access network device;
determining that a connection between a satellite and a ground station is interrupted or is to be interrupted, and setting (S302) a first timer according to the feeder link information, wherein
a timing duration of the first timer is not less than an interruption period of the connection, wherein the feeder link information is for determining information of the connection between the satellite and the ground station, and the feeder link information comprises coverage information of the satellite, or a starting moment of the connection, a period of the connection, an interruption starting moment of the connection, and the interruption period of the connection; and
sending (S303) the first timer to a terminal device associated with the connection, wherein the first timer is for instructing the terminal device to stop sending uplink information before expiration of the first timer.

2. The method of claim 1, wherein the setting (S302) a first timer according to the feeder link information, comprises:
in response to the feeder link information comprising the coverage information of the satellite,
determining, according to the coverage information of the satellite indicating a region covered by the satellite within one or more time ranges, a location of the ground station and the starting moment of the connection, the period of the connection, the interruption starting moment of the connection, and the interruption period of the connection; and
setting the first timer according to the starting moment of the connection, the period of the connection, the interruption starting moment of the connection, and the interruption period of the connection;
in response to the feeder link information comprising the starting moment, the period, the interruption starting moment, and the interruption period of the connection,
setting the first timer according to the starting moment of the connection, the period of the connection, the interruption starting moment of the connection, and the interruption period of the connection.

3. The method of claim 1 or 2, wherein the method further comprises:
receiving first capability information sent by the terminal device, wherein the first capability information indicates that the terminal device supports a high latency service; and
receiving the feeder link information sent by an access network device.

4. The method of claim 3, wherein before setting the first timer, the method further comprises:
authorizing, according to the first capability information, the terminal device to use the high latency service.

5. The method of any one of claims 1 to 4, further comprising:
receiving the feeder link information through at least one of:
a registration procedure initiated by the terminal device;
a registration update procedure initiated by the terminal device;
a service request procedure initiated by the terminal device; or
an access network connection release procedure initiated by the access network device.

6. The method of any one of claims 1 to 5, further comprising:
sending the first timer to the terminal device associated with the connection through at least one of:
a user equipment configuration update, UCU, procedure initiated by a network;
a service request procedure initiated by the network;
a registration procedure initiated by the terminal device; or
a registration update procedure initiated by the terminal device.

7. The method of any one of claims 1 to 6, further comprising:
in a case of determining an interruption of the connection according to the feeder link information, performing at least one of:
switching a state of the terminal device into an idle state; or
instructing a second core network element to buffer downlink information of the terminal device.

8. The method of any one of claims 1 to 7, further comprising:
in a case of determining an establishment of the connection according to the feeder link information, performing at least one of:
switching a state of the terminal device into a connection state; or
instructing a second core network element to send buffered downlink information of the terminal device.

9. A communication apparatus, **characterized in that**, comprising:
a receiving module, configured to receive feeder link information sent by an access network device;
a processing module (801), configured to determine that a connection between a satellite and a ground station is interrupted or is to be interrupted, and set a first timer according to
the feeder link information, wherein a timing duration of the first timer is not less than an interruption period of the connection, wherein the feeder link information is for determining information of the connection between the satellite and the ground station, and the feeder link information comprises coverage information of the satellite, or a starting moment of the connection, a period of the connection, an interruption starting moment of the connection, and the interruption period of the connection; and
a sending module (803), configured to send the first timer to a terminal device associated with the connection, wherein the first timer is for instructing the terminal device to stop sending uplink information before expiration of the first timer.

## Patentansprüche

1. Kommunikationsverfahren, das durch ein erstes Kernnetzwerkelement durchgeführt wird, umfassend:
Empfangen von Feeder-Link-Informationen, die durch eine Zugangsnetzvorrichtung gesendet werden;
Feststellen, dass eine Verbindung zwischen einem Satelliten und einer Bodenstation unterbrochen ist oder unterbrochen werden soll, und Einstellen (S302) eines ersten Timers gemäß den Feeder-Link-Informationen, wobei eine Zeitgeberdauer des ersten Timers nicht geringer ist als eine Unterbrechungsdauer der Verbindung, wobei die Feeder-Link-Informationen zum Bestimmen von Informationen der Verbindung zwischen dem Satelliten und der Bodenstation dienen und die Feeder-Link-Informationen Abdeckungsinformationen des Satelliten oder einen Beginnzeitpunkt der Verbindung, eine Dauer der Verbindung, einen Unterbrechungsbeginnzeitpunkt der Verbindung und die Unterbrechungsdauer der Verbindung umfassen; und
Senden (S303) des ersten Timers an ein mit der Verbindung verknüpftes Endgerät, wobei der erste Timer zum Anweisen des Endgeräts dient, vor einem Ablauf des ersten Timers das Senden von Uplink-Informationen zu stoppen.

2. Verfahren nach Anspruch 1, wobei das Einstellen (S302) eines ersten Timers gemäß den Feeder-Link-Informationen Folgendes umfasst:
als Reaktion darauf, dass die Feeder-Link-Informationen die Abdeckungsinformationen des Satelliten umfassen,
Bestimmen, gemäß den Abdeckungsinformationen des Satelliten, die eine von dem Satelliten innerhalb eines oder mehrerer Zeitbereiche abgedeckte Region angeben, eines Ortes der Bodenstation, des Beginnzeitpunkts der Verbindung, der Dauer der Verbindung, des Unterbrechungsbeginnzeitpunkts der Verbindung und der Unterbrechungsdauer der Verbindung; und
Einstellen des ersten Timers gemäß dem Beginnzeitpunkt der Verbindung, der Dauer der Verbindung, dem Unterbrechungsbeginnzeitpunkt der Verbindung und der Unterbrechungsdauer der Verbindung;
als Reaktion darauf, dass die Feeder-Link-Informationen den Beginnzeitpunkt, die Dauer, den Unterbrechungsbeginnzeitpunkt und die Unterbrechungsdauer der Verbindung umfassen,
Einstellen des ersten Timers gemäß dem Beginnzeitpunkt der Verbindung, der Dauer der Verbindung, dem Unterbrechungsbeginnzeitpunkt der Verbindung und der Unterbrechungsdauer der Verbindung.

3. Verfahren nach Anspruch 1 oder 2, wobei das Verfahren ferner Folgendes umfasst:
Empfangen von durch das Endgerät gesendeten ersten Fähigkeitsinformationen, wobei die ersten Fähigkeitsinformationen angeben, dass das Endgerät einen Dienst mit hoher Latenz unterstützt; und
Empfangen der durch eine Zugangsnetzvorrichtung gesendeten Feeder-Link-Informationen.

4. Verfahren nach Anspruch 3, wobei das Verfahren vor dem Einstellen des ersten Timers ferner Folgendes umfasst:
Autorisieren des Endgeräts zur Nutzung des Dienstes mit hoher Latenz gemäß den ersten Fähigkeitsinformationen.

5. Verfahren nach einem der Ansprüche 1 bis 4, ferner umfassend:
Empfangen der Feeder-Link-Informationen über mindestens eines von:
einem durch das Endgerät initiierten Registrierungsverfahren;
einem durch das Endgerät initiierten Registrierungsaktualisierungsverfahren;
einem durch das Endgerät initiierten Dienstanforderungsverfahren; oder
einem durch die Zugangsnetzvorrichtung initiierten Verfahren zur Freigabe der Zugangsnetzverbindung.

6. Verfahren nach einem der Ansprüche 1 bis 5, ferner umfassend:
Senden des ersten Timers an das mit der Verbindung verknüpfte Endgerät über mindestens eines von:
einem durch ein Netzwerk initiierten Verfahren zur Konfigurationsaktualisierung, UCU, eines Benutzergeräts;
einem durch das Netzwerk initiierten Dienstanforderungsverfahren;
einem durch das Endgerät initiierten Registrierungsverfahren; oder
einem durch das Endgerät initiierten Registrierungsaktualisierungsverfahren.

7. Verfahren nach einem der Ansprüche 1 bis 6, ferner umfassend:
in einem Fall, in dem gemäß den Feeder-Link-Informationen eine Unterbrechung der Verbindung festgestellt wird, Durchführen von mindestens Folgendem:
Umschalten eines Zustands des Endgeräts in einen Ruhezustand; oder
Anweisen eines zweiten Kernnetzwerkelements, Downlink-Informationen des Endgeräts zu puffern.

8. Verfahren nach einem der Ansprüche 1 bis 7, ferner umfassend:
in einem Fall, in dem gemäß den Feeder-Link-Informationen ein Aufbau der Verbindung festgestellt wird, Durchführen von mindestens Folgendem:
Umschalten eines Zustands des Endgeräts in einen Verbindungszustand; oder
Anweisen eines zweiten Kernnetzwerkelements, gepufferte Downlink-Informationen des Endgeräts zu senden.

9. Kommunikationsvorrichtung, **dadurch gekennzeichnet, dass** sie umfasst:
ein Empfangsmodul, das konfiguriert ist, durch eine Zugangsnetzvorrichtung gesendete Feeder-Link-Informationen zu empfangen;
ein Verarbeitungsmodul (801), das konfiguriert ist, festzustellen, dass eine Verbindung zwischen einem Satelliten und einer Bodenstation unterbrochen ist oder unterbrochen werden soll, und einen ersten Timer gemäß den Feeder-Link-Informationen einzustellen, wobei eine Zeitgeberdauer des ersten Timers nicht geringer ist als eine Unterbrechungsdauer der Verbindung, wobei die Feeder-Link-Informationen zum Bestimmen von Informationen der Verbindung zwischen dem Satelliten und der Bodenstation dienen und die Feeder-Link-Informationen Abdeckungsinformationen des Satelliten oder einen Beginnzeitpunkt der Verbindung, eine Dauer der Verbindung, einen Unterbrechungsbeginnzeitpunkt der Verbindung und die Unterbrechungsdauer der Verbindung umfassen; und
ein Sendemodul (803), das konfiguriert ist, den ersten Timer an ein mit der Verbindung verknüpftes Endgerät zu senden, wobei der erste Timer zum Anweisen des Endgeräts dient, vor einem Ablauf des ersten Timers das Senden von Uplink-Informationen zu stoppen.

## Revendications

1. Procédé de communication, mis en œuvre par un premier élément de réseau cœur, comprenant :
la réception d'informations de liaison d'alimentation envoyées par un dispositif de réseau d'accès ;
la détermination qu'une connexion entre un satellite et une station terrestre est interrompue ou va être interrompue, et le réglage (S302) d'un premier temporisateur selon les informations de liaison d'alimentation, dans lequel une durée de temporisation du premier temporisateur n'est pas inférieure à une durée d'interruption de la connexion, dans lequel les informations de liaison d'alimentation servent à déterminer des informations de la connexion entre le satellite et la station terrestre, et les informations de liaison d'alimentation comprennent des informations de couverture du satellite, ou un moment de début de la connexion, une durée de la connexion, un moment de début d'interruption de la connexion et la durée d'interruption de la connexion ; et
l'envoi (S303) du premier temporisateur à un dispositif terminal associé à la connexion, dans lequel le premier temporisateur sert à ordonner au dispositif terminal d'arrêter l'envoi d'informations de liaison montante avant une expiration du premier temporisateur.

2. Procédé selon la revendication 1, dans lequel le réglage (S302) d'un premier temporisateur selon les informations de liaison d'alimentation comprend :
en réponse aux informations de liaison d'alimentation comprenant les informations de couverture du satellite,
la détermination, selon les informations de couverture du satellite indiquant une région couverte par le satellite dans une ou plusieurs plages de temps, d'un emplacement de la station terrestre, du moment de début de la connexion, de la durée de la connexion, du moment de début d'interruption de la connexion et de la durée d'interruption de la connexion ; et
le réglage du premier temporisateur selon le moment de début de la connexion, la durée de la connexion, le moment de début d'interruption de la connexion et la durée d'interruption de la connexion ;
en réponse aux informations de liaison d'alimentation comprenant le moment de début, la durée, le moment de début d'interruption et la durée d'interruption de la connexion,
le réglage du premier temporisateur selon le moment de début de la connexion, la durée de la connexion, le moment de début d'interruption de la connexion et la durée d'interruption de la connexion.

3. Procédé selon la revendication 1 ou 2, dans lequel le procédé comprend en outre :
la réception de premières informations de capacité envoyées par le dispositif terminal, les premières informations de capacité indiquant que le dispositif terminal prend en charge un service à latence élevée ; et
la réception des informations de liaison d'alimentation envoyées par un dispositif de réseau d'accès.

4. Procédé selon la revendication 3, dans lequel, avant le réglage du premier temporisateur, le procédé comprend en outre :
l'autorisation, selon les premières informations de capacité, du dispositif terminal à utiliser le service à latence élevée.

5. Procédé selon l'une quelconque des revendications 1 à 4, comprenant en outre :
la réception des informations de liaison d'alimentation par au moins un procédé parmi :
un procédé d'enregistrement initié par le dispositif terminal ;
un procédé de mise à jour d'enregistrement initié par le dispositif terminal ;
un procédé de demande de service initié par le dispositif terminal ; ou
un procédé de libération de connexion de réseau d'accès initié par le dispositif de réseau d'accès.

6. Procédé selon l'une quelconque des revendications 1 à 5, comprenant en outre :
l'envoi du premier temporisateur au dispositif terminal associé à la connexion par au moins un procédé parmi :
un procédé de mise à jour de configuration d'équipement utilisateur, UCU, initié par un réseau ;
un procédé de demande de service initié par le réseau ;
un procédé d'enregistrement initié par le dispositif terminal ; ou
un procédé de mise à jour d'enregistrement initié par le dispositif terminal.

7. Procédé selon l'une quelconque des revendications 1 à 6, comprenant en outre :
dans un cas de détermination d'une interruption de la connexion selon les informations de liaison d'alimentation, la mise en œuvre d'au moins une opération parmi :
le passage d'un état du dispositif terminal à un état inactif ; ou
l'ordre donné à un deuxième élément de réseau cœur de mettre en mémoire tampon des informations de liaison descendante du dispositif terminal.

8. Procédé selon l'une quelconque des revendications 1 à 7, comprenant en outre :
dans un cas de détermination d'un établissement de la connexion selon les informations de liaison d'alimentation, la mise en œuvre d'au moins une opération parmi :
le passage d'un état du dispositif terminal à un état de connexion ; ou
l'ordre donné à un deuxième élément de réseau cœur d'envoyer des informations de liaison descendante mises en mémoire tampon du dispositif terminal.

9. Dispositif de communication, **caractérisé en ce qu'**il comprend :
un module de réception configuré pour recevoir des informations de liaison d'alimentation envoyées par un dispositif de réseau d'accès ;
un module de traitement (801) configuré pour déterminer qu'une connexion entre un satellite et une station terrestre est interrompue ou va être interrompue, et pour régler un premier temporisateur selon les informations de liaison d'alimentation, dans lequel une durée de temporisation du premier temporisateur n'est pas inférieure à une durée d'interruption de la connexion, dans lequel les informations de liaison d'alimentation servent à déterminer des informations de la connexion entre le satellite et la station terrestre, et les informations de liaison d'alimentation comprennent des informations de couverture du satellite, ou un moment de début de la connexion, une durée de la connexion, un moment de début d'interruption de la connexion et la durée d'interruption de la connexion ; et
un module d'envoi (803) configuré pour envoyer le premier temporisateur à un dispositif terminal associé à la connexion, dans lequel le premier temporisateur sert à ordonner au dispositif terminal d'arrêter l'envoi d'informations de liaison montante avant une expiration du premier temporisateur.
